(19) **Europäisches Patentamt / European Patent Office / Office européen des brevets**

(11) **EP 4 327 062 B1**

(12) **FASCICULE DE BREVET EUROPEEN**

(45) Date de publication et mention
de la délivrance du brevet:
**04.02.2026 Bulletin 2026/06**

(21) Numéro de dépôt: **22723605.6**

(22) Date de dépôt: **19.04.2022**

(51) Classification Internationale des Brevets (IPC):
*G01L 11/02* (2006.01)    *G01L 11/00* (2006.01)

(52) Classification Coopérative des Brevets (CPC):
**G01L 11/025; G01L 11/002**

(86) Numéro de dépôt international:
**PCT/EP2022/060302**

(87) Numéro de publication internationale:
**WO 2022/223552 (27.10.2022 Gazette 2022/43)**

(54) **DISPOSITIF POUR LA MESURE DE PRESSION**

DRUCKMESSEINRICHTUNG

PRESSURE-MEASURING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.04.2021 FR 2104180**

(43) Date de publication de la demande:
**28.02.2024 Bulletin 2024/09**

(73) Titulaires:
• **Centre National de la Recherche Scientifique**
**75016 Paris (FR)**
• **Université Marie et Louis Pasteur**
**25000 Besançon (FR)**

(72) Inventeurs:
• **BEUGNOT, Jean-Charles**
**70190 Boulot (FR)**
• **CHRETIEN, Jacques**
**70290 Champagney (FR)**
• **GODET, Adrien**
**25480 Pirey (FR)**
• **PHAN HUY, Kien**
**25000 Besancon (FR)**

• **SALVI, Jérôme**
**70700 Bonnevent Velloreille (FR)**

(74) Mandataire: **IPAZ**
**Bâtiment Platon**
**Parc Les Algorithmes**
**91190 Saint-Aubin (FR)**

(56) Documents cités:
**US-A- 5 093 569     US-A1- 2008 085 073**

• **MCMILLEN BEN ET AL: "Fiber Bragg grating vacuum sensors", APPLIED PHYSICS LETTERS, AMERICAN INSTITUTE OF PHYSICS, 2 HUNTINGTON QUADRANGLE, MELVILLE, NY 11747, vol. 87, no. 23, 28 November 2005 (2005-11-28), pages 234101 - 234101, XP012076797, ISSN: 0003-6951, DOI: 10.1063/ 1.2140082**
• **ZHU XIAOLIANG ET AL: "Tapered splice technique for capillary optical fiber", OPTICAL FIBER TECHNOLOGY, vol. 36, 1 January 2017 (2017-01-01), pages 130 - 133, XP085114691, ISSN: 1068-5200, DOI: 10.1016/ J.YOFTE.2017.03.007**

## Description

### Domaine technique

La présente invention concerne un dispositif pour la mesure de pression. Elle concerne également un système de mesure de la pression du vide équipé d'un tel dispositif.

Le domaine de l'invention est celui de la mesure de pression, notamment de la mesure de pression du vide.

### Etat de la technique antérieure

On connait des dispositifs pour la mesure de pression.

Par exemple, les documents US2008/085073A, US5093569A et XP085114691 divulguent des capteurs à fibre optique.

Par exemple, il est connu selon l'article « Fiber Bragg grating vacuum sensors », https://doi.org/10.1063/ 1.2140082, un capteur pour la mesure de la pression du vide comprenant une fibre optique dont le cœur est entouré d'une partie métallique et dans laquelle est inséré un réseau de Bragg. Ce dispositif comprend un premier laser émettant une onde optique dans le cœur de la fibre. Dans ce dispositif, l'onde optique du premier laser traversant la fibre optique va provoquer une augmentation de température dans la partie de la fibre entourée de métal. L'augmentation de température dans cette partie de fibre optique va induire une variation d'indice dépendant de la température locale de la fibre. Ce dispositif utilise aussi un second laser émettant une deuxième onde optique pour interroger la fibre optique. L'onde émise par le second laser va être envoyée dans la fibre optique et lors de son parcours cette deuxième onde va subir un décalage en longueur d'onde à chaque variation d'indice rencontré. Un tel dispositif comprend aussi un réseau de Bragg positionné dans la fibre optique pour réfléchir une partie de l'onde optique du second laser à chaque variation d'indice d'intérêt (i.e. celui prévu par le réseau de Bragg). Dans ce dispositif, l'étude des différents décalages en longueur d'onde des ondes réfléchies issues du second laser permet de remonter à des mesures de pression.

Ce dispositif est fonctionnel mais pose différents problèmes, notamment :

- de compacité car un tel dispositif nécessite l'utilisation d'au moins deux lasers,
- de simplicité et de mise en œuvre, car la fibre optique utilisée dans la mesure est difficile à concevoir à cause de l'insertion d'un réseau de Bragg dans la fibre optique et à l'ajout d'une partie métallique autour d'une partie de la fibre. Par conséquent, un tel dispositif, notamment la fibre optique utilisée pour la mesure, nécessite donc de nombreuses étapes de conception qui sont majoritairement non triviales à réaliser,
- de coût lié à la conception et à l'utilisation de réseau de Bragg et de la partie métallique,
- de précision car ce type de capteur est limité en précision.

Ainsi, un tel dispositif peut remonter l'information de pression via une mesure d'une variation d'indice. Ce dispositif de mesure de l'état de l'art ne peut se dissocier de l'utilisation d'un réseau de Bragg car ce dernier permet la mesure du décalage de l'indice via la réflexion des ondes décalées en longueur d'onde sur les réflecteurs du réseau de Bragg.

Le but de la présente invention est de proposer un dispositif pour la mesure de pression permettant de résoudre au moins un des problèmes susmentionnés.

### Exposé de l'invention

L'invention permet d'atteindre au moins un des buts précités par un dispositif, selon la revendication 1, et un procédé, selon la revendication 15, pour la mesure de pression, le dispositif comprenant :

- une fibre optique comprenant une partie amincie,
- un laser, dit laser de chauffe, agencé pour émettre une onde optique, dit onde de chauffe, dans la partie amincie,
- un moyen de mesure comprenant un capteur agencé pour mesurer une onde optique rétrodiffusée issue d'une onde optique, dite d'interrogation, et provenant de la partie amincie de la fibre optique, et
- une unité de traitement agencée et/ou programmée pour mesurer une pression d'un fluide, de préférence un gaz, entourant la partie amincie à partir de la mesure de l'onde rétrodiffusée.

Ainsi, le dispositif selon l'invention utilise une fibre optique présentant une partie amincie. Le dispositif selon l'invention utilise ainsi un agencement de fibre optique simple à mettre en œuvre et qui ne nécessite pas l'ajout de composants supplémentaires, tels qu'un réseau de Bragg et/ou de partie métallique dans la fibre optique. Le dispositif est donc plus simple et plus facile à mettre en œuvre.

Les coûts associés aux composants du dispositif et à sa conception sont aussi réduits.

En outre, le dispositif selon l'invention peut fonctionner avec un seul laser qui peut être à la fois utilisé pour exciter la fibre et pour l'interroger. Ceci améliore aussi la compacité, la simplicité et la mise en œuvre du dispositif selon l'invention.

L'utilisation d'une fibre optique comprenant une partie amincie sans ajout d'éléments supplémentaires dans le cœur de la fibre optique permet de favoriser l'augmentation de la température dans la fibre optique et dans l'environnement extérieur à la fibre optique par une conception simple à mettre en œuvre et peu onéreuse. Associer une fibre optique avec une partie amincie avec l'agencement du dispositif selon l'invention permet de favoriser l'augmentation de la température dans la fibre optique, notamment dans la partie amincie, et dans l'environnement extérieur à la fibre optique avec seulement un seul trajet de l'onde de chauffe dans la partie amincie. La mesure de pression avec le dispositif selon l'invention est donc plus simple à mettre en œuvre.

La mesure de la pression selon l'invention s'appuie sur la mesure de l'onde rétrodiffusée issue de la partie amincie qui porte l'information de variation de température.

Par « onde rétrodiffusée » équivalent au terme anglais « backscatter », on entend une onde issue du phénomène de diffusion de la lumière, c'est-à-dire une onde optique qui est déviée dans plusieurs directions par une interaction avec des éléments du milieu dans lequel elle se propage. En particulier, l'onde rétrodiffusée correspond à une partie d'une onde incidente qui est renvoyée dans la direction de l'onde incidente par interaction de l'onde incidente avec le milieu de propagation de l'onde, ici la fibre optique. Ainsi, l'onde rétrodiffusée au sens de l'invention est induite par un phénomène appartenant à la diffusion de la lumière. Par conséquent, l'onde rétrodiffusée au sens de l'invention est à distinguer du cas d'une onde incidente sur une surface réfléchissante pour laquelle une partie du faisceau est transmise alors qu'une autre partie est réfléchie. Dans ce cas, l'onde incidente interagit avec un élément ajouté à la fibre optique et non avec « la matière » de la fibre optique, c'est-à-dire le cœur de la fibre optique.

La fibre optique peut ne pas comprendre de réseau de Bragg et/ou la partie amincie de la fibre optique peut ne pas comprendre de réseau de Bragg.

La partie amincie de la fibre optique peut ne pas comprendre de traitement de surface métallique, par exemple de « coating » métallique sur une paroi extérieure ou sur un pourtour extérieur de la partie amincie.

La fibre optique peut ne pas comprendre de partie métallique entourant la partie amincie.

Ainsi, la fibre optique peut consister en une partie non amincie et une partie amincie.

Dans le dispositif selon l'invention, l'augmentation de la température dans la fibre optique provient de préférence du seul fait de la propagation de l'onde de chauffe dans la partie amincie.

L'onde de chauffe peut comprendre une puissance d'au moins deux fois, de préférence d'au moins neuf fois, supérieure à la puissance de l'onde d'interrogation.

Ainsi, le dispositif selon l'invention peut utiliser une onde de chauffe comprenant une forte puissance. De cette manière, seule l'onde de chauffe excite la fibre optique en vue d'une augmentation de température.

De préférence, le capteur du moyen de mesure peut comprendre un spectromètre.

Par « partie amincie » on entend :

- une partie présentant une section transverse inférieure à une autre partie de fibre dite « non amincie », ou
- de préférence, une partie présentant une section transverse d'aire de préférence au moins quatre fois plus petite ou même de préférence au moins cinquante fois plus petite à l'aire de la section transverse d'une autre partie de fibre dite « non amincie ».

En outre, cette partie amincie peut comprendre une section transverse constante sur une certaine longueur.

De préférence, la section transverse de la partie amincie peut être est au moins deux fois plus petite que la partie de fibre non amincie, de préférence huit fois plus petite que la partie non amincie.

La partie amincie peut comprendre une section transverse inférieure à 50 micromètres, de préférence inférieure ou égale à 1 micromètre.

Par section transverse, on entend de préférence un diamètre tel que couramment utilisé dans le langage des fibres optiques.

Un tel agencement permet d'obtenir une section transverse de la partie amincie largement inférieure aux autres parties de la fibre optique.

La partie amincie peut s'étendre suivant une direction longitudinale inférieure à 150 millimètres, de préférence supérieure à 20 millimètres et/ou inférieure à 120 millimètres.

Cette taille permet d'obtenir une partie de fibre amincie d'une taille conséquente. La taille de fibre optique amincie permet d'améliorer les effets thermiques dans la fibre optique, notamment dû au fait que le dispositif selon l'invention est agencé pour provoquer une augmentation de la température dans la partie amincie avec seulement un trajet de l'onde chauffe dans la partie amincie à la différence de certains dispositifs de l'état de l'art qui peuvent nécessiter :

- plusieurs allers-retours de l'onde servant à exciter thermiquement la fibre optique, et/ou

- l'utilisation de composants supplémentaires tels qu'au moins un réseau de Bragg et/ou une partie métallique et/ou tout autre élément ajouté à la fibre optique pour favoriser l'excitation thermique.

Le laser de chauffe peut comprendre une longueur d'onde d'émission inférieure ou égale à 1650 nanomètres, de préférence égale à 1555 nanomètres $\pm$ 10 nanomètres ou 1550 nanomètres $\pm$ 10 nanomètres.

Par conséquent, le laser de chauffe peut être un laser émettant une longueur d'onde dans le visible, par exemple entre 400-780 nanomètres ou émettre dans l'infrarouge, par exemple dans le proche infrarouge entre 780 nanomètres et 1650 nanomètres.

Utiliser un laser de chauffe émettant dans le visible permet d'augmenter les phénomènes de rétrodiffusion dans la partie amincie. En particulier, le phénomène de rétrodiffusion sera plus fort, ce qui permet d'enregistrer un signal rétrodiffusé de plus forte intensité. Le rapport signal sur bruit de l'unité de traitement est donc amélioré.

Utiliser un laser de chauffe émettant entre 1200 nanomètres et 1400 nanomètres permet de chauffer plus efficacement la partie amincie de la fibre optique dû aux pics d'absorption de l'eau.

Avantageusement, le laser de mesure peut émettre une longueur d'onde d'émission à 1550 ou 1555 nanomètres, c'est-à-dire dans une longueur d'onde d'émission couramment utilisée en télécommunication. Le laser de mesure peut donc être un laser couramment utilisée dans les télécommunications, ce qui garantit un bon rapport qualité-prix.

De préférence, le laser de chauffe est continu, i.e. est agencé pour émettre son onde (onde de chauffe) de manière continue.

Ainsi, le dispositif selon l'invention peut ne pas utiliser de laser de chauffe impulsionnel.

Utiliser un laser continu permet de chauffer plus efficacement la fibre optique, notamment la partie amincie, car il n'y a pas d'interruption du flux de l'onde de chauffe.

Dans une première variante, le dispositif selon l'invention peut comprendre un coupleur agencé pour diviser l'onde émise par le laser de chauffe en l'onde de chauffe et l'onde d'interrogation, ledit coupleur autorisant le passage de l'onde de chauffe et de l'onde d'interrogation vers la fibre optique dans un premier sens et autorisant le passage de l'onde rétrodiffusée issue partie amincie vers le moyen de mesure dans un deuxième sens.

Dans cette variante, l'onde de chauffe et l'onde d'interrogation proviennent d'une même onde émise par un seul et même laser, le laser de chauffe. Par conséquent un seul laser peut être utilisé pour chauffer la fibre optique, notamment la partie amincie et pour interroger la fibre optique afin de réaliser la mesure de pression.

Le dispositif selon l'invention est donc plus compact et plus facile à mettre en œuvre, notamment d'un point de vue de l'espace nécessaire à la mesure.

En outre, il propose un dispositif de mesure entièrement fibré, ce qui permet au dispositif selon l'invention d'être plus sécurisé, plus facilement transportable et modulable dans l'environnement extérieur.

Le moyen de mesure peut comprendre un laser, dit laser de mesure, agencé pour émettre une onde optique, dite de mesure, dans la fibre optique, agissant comme l'onde d'interrogation.

Un telle configuration permet de proposer un dispositif comprenant un laser permettant de chauffer la partie amincie de la fibre optique et un laser permettant d'interroger la fibre optique pour réaliser la mesure de pression.

En outre, comme deux ondes émises par deux lasers distincts peuvent être utilisées pour provoquer l'augmentation de température et la mesure de cette variation de température, il peut être plus facile de dissocier le signal de chauffe et de mesure, en terme de traitement de signaux, d'agencement et de contrôle. Par exemple, il peut être plus facile de contrôler la puissance de l'onde de chauffe et de l'onde de mesure.

Le laser de mesure peut être de préférence continu ou impulsionnel.

Si laser de mesure émet une onde de mesure continue, le dispositif selon l'invention peut suivre la variation de la pression dans le temps.

Le dispositif selon l'invention peut ne pas utiliser de laser de mesure émettant des impulsions inférieures à la milliseconde. Ainsi, si le laser de mesure est impulsionnel, il peut être agencé pour émettre des impulsions supérieures ou égales à la milliseconde.

Utiliser une onde de mesure impulsionnelle peut permettre une mesure plus rapide de la pression. Par exemple, de cette manière le dispositif selon l'invention peut donner une ou plusieurs informations de la pression de manière ponctuelle, en utilisant une ou plusieurs impulsions. De cette manière, la mesure de pression peut être déclenchée par envoi de l'onde de mesure dans la fibre optique, par exemple à un instant précis.

Dans une variante, le laser de mesure peut comprendre des éléments pour émettre des impulsions longues, c'est-à-dire supérieures ou égales à la milliseconde. Par exemple, le laser de mesure peut comprendre une diode laser impulsionnelle.

En outre, le laser de mesure peut comprendre au moins un élément pour former des impulsions longues. De cette manière le laser de mesure peut dans un premier temps émettre une onde de mesure continue qui est ensuite modelée par l'au moins un élément pour devenir une onde impulsionnelle. L'au moins un élément pour former des impulsions peut comprendre :

- un hacheur optique aussi appelé « optical chopper » en anglais, et/ou
- un déflecteur optique agencé pour couper dans une premier état l'onde de mesure et laisser passer dans un deuxième état l'onde de mesure, et/ou
- un modulateur optique, par exemple un Modulateur Acousto-Optique (AOM) fonctionnant en mode impulsionnel couplé de préférence avec un driver.

L'onde de mesure peut être envoyée dans la fibre optique décalée temporelle de l'onde de chauffe. De cette manière, l'onde de mesure peut être envoyée dans la fibre optique à un instant précis pour réaliser la mesure de pression.

Le laser de chauffe et/ou le laser de mesure peuvent être agencés pour chacun émettre l'onde de chauffe et/ou l'onde d'interrogation suivant une direction d'élongation de la fibre optique. En particulier, l'onde de chauffe et/ou l'onde de mesure peuvent être agencées pour se propager dans la fibre optique, de préférence dans le cœur de la fibre optique, suivant sa direction d'élongation.

Le laser de chauffe et/ou de mesure peuvent être de préférence continus et mono-fréquence.

De préférence, l'onde de mesure peut comprendre un décalage en longueur d'onde par rapport à l'onde de chauffe inférieur ou égal à 10 nanomètres.

Ainsi, le laser de mesure peut comprendre une longueur d'onde d'émission différente de la longueur d'onde d'émission du laser de chauffe. Cela peut permettre de mieux distinguer l'onde de mesure et l'onde de chauffe et donc d'améliorer leur contrôle.

Dans des variantes, le dispositif selon l'invention peut comprendre au moins un modulateur optique agencé pour réaliser un décalage en longueur d'onde de l'onde optique en sortie du modulateur optique.

De préférence, le modulateur optique peut comprendre un Modulateur Acousto Optique (AOM) de préférence couplé avec un driver. L'AOM peut de préférence fonctionner en mode continu. L'AOM peut être agencé pour décaler en longueur d'onde une onde optique en sortie de l'AOM.

Un tel agencement peut permettre de mieux distinguer l'onde de chauffe de l'onde d'interrogation et/ou l'onde de mesure. De cette manière les traitements de l'onde rétrodiffusée peuvent être facilités. En outre l'AOM permet de mieux régler le décalage en longueur d'onde de l'onde de chauffe par rapport à l'onde d'interrogation et/ou de mesure.

L'AOM peut être agencé pour réaliser un décalage en longueur d'onde inférieur ou égal à 10 nanomètres. Ce décalage en longueur d'onde peut être positif ou négatif. Ainsi la valeur absolue du décalage en longueur d'onde peut être inférieure ou égale à 10 nanomètres.

Dans une seconde variante, le dispositif selon l'invention peut comprendre un circulateur autorisant, dans un premier sens, le passage de l'onde de chauffe du laser de chauffe et le passage de l'onde de mesure du laser de mesure dans la fibre optique, et autorisant, dans un deuxième sens, le passage de l'onde rétrodiffusée issue de la partie amincie vers le moyen de mesure.

Ainsi, dans cette configuration l'onde de chauffe et l'onde de mesure peuvent être chacune émise par un laser distinct. Suivant cette configuration, l'onde émise par le laser de chauffe n'a plus besoin d'être divisée.

L'agencement du laser de chauffe et de mesure est donc simple et très facile à mettre en œuvre. En outre, il propose un dispositif de mesure entièrement fibré, ce qui permet au dispositif selon l'invention d'être plus sécurisé et plus facilement transportable et modulable dans l'environnement extérieur.

A titre d'exemple non limitatif, un AOM couplé avec un driver peut être positionné en amont ou en aval du coupleur ou du circulateur.

Le capteur du moyen de mesure peut comprendre un réflectomètre.

L'onde rétrodiffusée peut comprendre une onde de Rayleigh, ou de Raman ou de Brillouin.

L'unité de traitement peut être agencée et/ou programmée pour déterminer une variation de température de la fibre optique, en particulier de la partie amincie de la fibre optique, à partir de la mesure de l'onde rétrodiffusée.

A titre d'exemple, si l'onde de mesure est une onde impulsionnelle, les impulsions peuvent être réglées pour mesurer des faibles variations de température. Ceci améliore la précision du dispositif selon l'invention.

L'unité de traitement peut comprendre un thermomètre à effet Brillouin, et/ou à effet Raman, et/ou à effet Rayleigh agencés pour mesurer une pression à partir :

- d'une variation de température de la fibre optique, de préférence de la partie amincie de la fibre optique, et
- d'une table reliant la variation de température à la mesure de pression.

Cette table peut être connue ou déterminée de manière empirique.

De préférence, l'onde rétrodiffusée est une onde de Brillouin. L'unité de traitement peut être agencée pour mesurer une vitesse de propagation de l'onde rétrodiffusée sur la base d'un faible décalage en longueur d'onde de l'onde rétrodiffusée par rapport à l'onde d'interrogation ou l'onde de mesure dont est issue l'onde rétrodiffusée.

Le faible décalage en longueur d'onde peut être causé par l'effet Doppler.

Le thermomètre à effet Brillouin peut être agencé pour mesurer la variation de la température $\Delta T$ via la formule

suivante :

[Math 1]

$$\frac{1}{F_L}\frac{\Delta F_L}{\Delta T} = 9.2 * 10^{-5}/°C$$

Avec $F_L$ correspondant à un flux optique de l'onde rétrodiffusée et $\Delta F_L$ correspondant à la variation du flux optique de l'onde rétrodiffusée.

L'onde rétrodiffusée de type Raman peut comprendre une onde anti-Stokes rétrodiffusée.

Ainsi, dans une autre variante, l'onde rétrodiffusée peut être une onde de Raman. L'unité de traitement peut être agencée pour mesurer une variation d'intensité de l'onde anti-Stokes rétrodiffusée par rapport à l'onde d'interrogation ou l'onde de mesure dont est issue l'onde rétrodiffusée.

Le thermomètre à effet Raman peut être agencé pour mesurer la variation de la température via la formule suivante :

[Math 2]

$$R(T) = \left(\frac{K_{as}}{K_s}\right)\left(\frac{\lambda_s}{\lambda_{as}}\right)^4 exp\left(-\frac{h.v_R.c/k_B}{T}\right)$$

Avec R(T) correspondant à un ratio entre des intensités de flux de l'onde Raman Stockes et Raman anti-Stockes de l'onde rétrodiffusée. Le ration R(T) peut être de l'ordre 0,74% à une température de 300 Kelvin (K),

$\lambda_{as}$, $\lambda_s$ correspondant respectivement aux longueurs d'ondes de résonnances anti-Stokes ($\lambda_{as}$) et Stokes ($\lambda_s$),

$K_{as}$, $K_s$ correspondant respectivement aux sections effectives des bandes anti-Stokes et Stokes,

$v_R$ correspondant à la résonance de la Silice, $v_R$ = 440 cm$^{-1}$, T la température en Kelvin, h la constante de Planck, c la vitesse de la lumière dans le vide, et $k_B$ correspondant à la constante de Boltzmann.

Dans une autre variante, l'onde diffusée peut être une onde de Rayleigh. L'unité de mesure peut être agencée pour mesurer une variation des pertes optiques de l'onde rétrodiffusée lors de sa propagation dans la partie amincie.

Le thermomètre à effet Rayleigh peut être agencé pour mesurer la variation de la température via la formule suivante :

[Math 3]

$$\frac{\Delta\lambda}{\lambda} = \frac{\Delta v}{v} = K_T.\Delta T$$

Avec pour une fibre en Silice légèrement dopée en germanium, $K_T$ = 6.45*10$^{-6}$C$^{-1}$, $\lambda$ correspondant à la longueur d'onde de rétrodiffusée et $\Delta\lambda$ à son décalage en longueur d'onde dans la fibre optique, v correspondant à la fréquence de l'onde rétrodiffusée et $\Delta v$ son décalage en fréquence dans la fibre optique.

L'unité de traitement peut être agencée pour mesurer une pression du vide inférieure ou égale à 0,9 bar, de préférence inférieure ou égale à 10$^{-9}$ bar.

Le dispositif peut comprendre au moins une autre fibre optique comprenant une partie amincie, au moins une autre fibre optique étant connectée en série à une extrémité libre de la fibre optique.

Par extrémité libre, on entend une extrémité de fibre optique qui n'est connectée à aucun élément physique.

De préférence, le dispositif peut comprendre une pluralité de fibres optiques connectées les unes aux autres en série, chaque fibre optique comprenant une partie amincie.

La pluralité des fibres optiques peuvent être connectées par soudure de fibres optique ou en utilisant un moyen de raccordement mécanique. Le moyen de raccordement mécanique peut comprendre un connecteur de fibre optique.

Le capteur du moyen de mesure peut être agencé pour mesurer une pluralité d'ondes rétrodiffusées provenant de chaque partie amincie de fibre optique et l'unité de traitement étant agencée et/ou programmée pour mesurer une pression d'un fluide entourant chaque partie amincie à partir de la mesure des ondes rétrodiffusées.

De cette manière, le dispositif de mesure peut être un dispositif de mesure dit « quasi distribué » ou « quasi-reparti ».

Les fibres optiques peuvent être similaires ou différentes. Par exemple, elles peuvent comprendre des sections de partie amincie différente ou des longueurs de partie amincie différentes.

Selon un autre aspect de l'invention, il est proposé un système de mesure de pression du vide comprenant une jauge placée dans une enceinte dans laquelle circule un fluide, ladite jauge comprenant une partie capteur comprenant un dispositif selon l'invention.

## Brève description des dessins

D'autres avantages et particularités de l'invention apparaîtront à la lecture de la description détaillée de mises en œuvre et de modes de réalisation nullement limitatifs, et des dessins annexés suivants.

La FIGURE 1 est une représentation schématique d'un exemple de réalisation non limitatif d'un agencement d'une fibre optique utilisée dans un dispositif selon l'invention ;

La FIGURE 2 est une première représentation schématique d'un exemple de réalisation d'un premier dispositif selon l'invention comprenant une fibre optique telle que décrite en FIGURE 1 ;

La FIGURE 3 est un représentation schématique d'un exemple de réalisation non limitatif d'un deuxième dispositif selon l'invention comprenant une fibre optique telle que décrite en FIGURE 1 ;

La FIGURE 4 est une représentation schématique d'un exemple de réalisation non limitatif d'un troisième dispositif selon l'invention comprenant une pluralité de fibres optiques comme décrites en FIGURE 1 et connectées les unes aux autres en série ;

La FIGURE 5 est une représentation schématique d'un système de mesure selon l'invention comprenant un dispositif selon l'invention tel que décrit en FIGURE 2 ou en FIGURE 3 ou en FIGURE 4.

## Description détaillée des figures

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détail structurel, ou avec seulement une partie des détails structurels si cette partie uniquement est suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

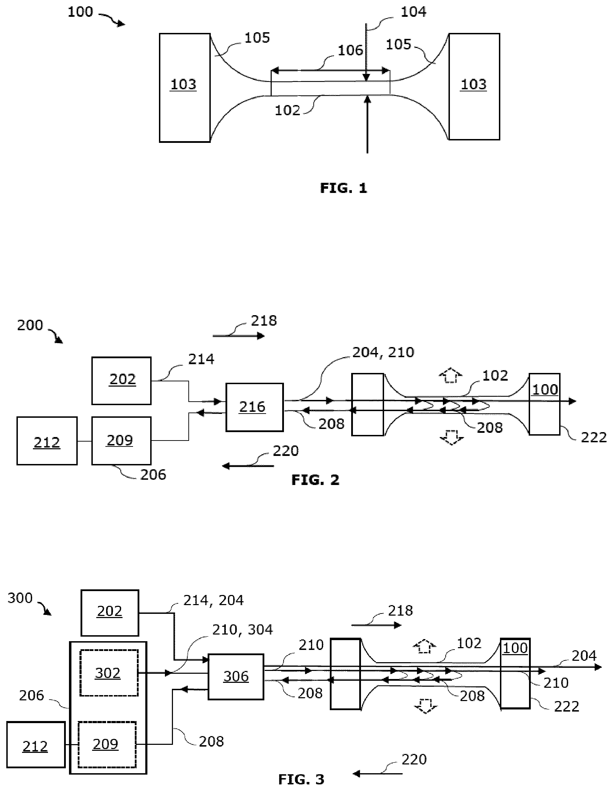

La FIGURE 1 est une représentation schématique d'un exemple d'un agencement d'une fibre optique 100 utilisée dans un dispositif selon l'invention.

La fibre optique 100 comprend une partie amincie 102, une partie non amincie 103 et une zone intermédiaire 105. La partie non amincie 103 entoure la partie amincie 102 de la fibre. La zone intermédiaire 105 correspond à la zone reliant la partie non amincie 103 de la fibre 100 à la partie amincie 102.

En particulier la partie amincie 102 comprend une section transverse 104 inférieure à 50 micromètres ($\mu$m). De préférence, la section transverse 104 de la partie amincie 102 est inférieure à 1 $\mu$m, par exemple de 0,5 $\mu$m.

La partie amincie 102 s'étend suivant une direction longitudinale 106 inférieure à 150 millimètres (mm), de préférence supérieure à 20 mm et/ou inférieure à 120 mm.

La section transverse 104 de la partie amincie 102 est constante suivant la taille de la direction longitudinale 106 de la partie amincie 102.

La taille de la direction longitudinale 106 est choisie pour favoriser les transferts thermiques dans la partie amincie 102 de la fibre optique 100. Dans le cas illustré en FIGURE 1, la partie amincie comprend une section transverse 104 constante sur 100 mm.

A titre d'exemple non limitatif, la fibre optique 100 est une fibre optique standard, par exemple une fibre optique standard de type SMF28.

La fibre optique 100 est en silice. La fibre optique 100 est de préférence nue, c'est-à-dire qu'elle ne comprend pas de couche de protection, appelée « coating » en anglais.

La partie non amincie 103 comprend une section transverse de 125 μm. La partie non amincie 103 comprend, à titre d'exemple non limitatif, un cœur de diamètre 10 μm, et une couche entourant le cœur appelée gaine ou « cladding » en anglais et de diamètre 125 μm. La partie amincie 102 ne comprend pas de couche « coating ».

La partie amincie 102 de la fibre optique 100 ne comprend pas de réseau de Bragg. La fibre optique 100 ne comprend pas de réseau de Bragg.

La partie amincie 102 de la fibre optique 100 ne comprend pas de traitement de surface métallique, par exemple de « coating métallique ». En particulier, le pourtour extérieur de la partie amincie 102 est dépourvu de traitement métallique ou de couche métallique entourant la partie amincie 102.

La FIGURE 2 est une première représentation schématique d'un exemple de réalisation d'un dispositif 200 selon l'invention comprenant une fibre optique 100 telle que décrite en FIGURE 1.

Le dispositif 200 est un dispositif pour la mesure de pression et comprend la fibre optique 100. Le dispositif 200 comprend aussi un laser 202, dit laser de chauffe 202, agencé pour émettre dans la fibre optique 100, une onde optique 204, dit onde de chauffe 204, dans la partie amincie 102. L'onde de chauffe 204 se propage dans la fibre optique 100, c'est-à-dire suivant la direction longitudinale 106 de la partie amincie 102. L'onde de chauffe 204 est agencée pour se propager dans la fibre optique 100 selon un seul sens 218, appelé premier sens 218 dans la suite. Par conséquent, l'onde de chauffe 204 effectue seulement un « aller » dans la fibre optique 100. Aucune cavité laser n'est nécessaire à la réalisation de la mesure selon le dispositif 200. La partie amincie de la fibre s'étend, par exemple, sur 100 mm. La taille de la partie amincie est choisie pour améliorer les transferts thermiques dans la partie amincie 102 de la fibre optique 100. Plus la partie amincie 102 est de grande taille, plus les transferts thermiques sont importants. Ceci est d'autant plus avantageux puisque l'onde de chauffe 204 se propage que dans le premier sens 218 dans la fibre optique 100.

Le dispositif 200 comprend aussi :

- un moyen de mesure 206 comprenant un capteur 209 agencé pour mesurer une onde optique rétrodiffusée 208 issue d'une onde optique 210, dite onde d'interrogation 210 et provenant de la partie amincie, et
- une unité de traitement 212 agencée et/ou programmée pour mesurer une pression d'un fluide (de préférence d'un gaz ou d'un mélange de gaz), ici un gaz tel que l'air, entourant la partie amincie 102 à partir de la mesure de l'onde rétrodiffusée 208.

L'unité de traitement comprend au moins un ordinateur, une unité centrale ou de calcul, un circuit électronique analogique (de préférence dédié), un circuit électronique numérique (de préférence dédié), et/ou un microprocesseur (de préférence dédié), et/ou des moyens logiciels.

La mesure et le traitement de toutes les ondes rétrodiffusées 208 issues de la partie amincie 102 de la fibre 100 permettent de remonter à la mesure de pression.

Le laser de chauffe 202 est continu et mono-fréquence. Utiliser un laser continu permet d'améliorer l'augmentation des effets thermiques dans la fibre optique 100, notamment dans la partie amincie 102 car le flux de l'onde de chauffe 204 n'est pas interrompu. A titre d'exemple non limitatif, le laser de chauffe 202 émet une onde optique à 1550 nm. Le laser de chauffe 202 est donc un laser utilisé couramment en télécommunication, ce qui lui procure un bon rapport qualité/prix.

Dans le dispositif illustré en FIGURE 2, l'onde de chauffe 204 et l'onde d'interrogation 210 sont issues d'une même onde optique 214 émise par le laser de chauffe 202. Le dispositif est donc très compact puisqu'il utilise un seul laser pour exciter thermiquement et interroger la fibre optique 100.

Le dispositif 200 comprend un coupleur 216 positionné en amont de la fibre optique 100 et en aval du laser de chauffe 202. Le coupleur 216 est agencé pour diviser l'onde émise 214 par le laser de chauffe 202 en l'onde de chauffe 204 et l'onde d'interrogation 210. En particulier, le coupleur 216 autorise :

- le passage de l'onde de chauffe 204 et de l'onde d'interrogation 210 vers la fibre optique 100 dans le premier sens 218, et
- le passage de l'onde rétrodiffusée 208 issue partie amincie 102 vers le moyen de mesure 208 dans un deuxième sens 220, qui est opposé au premier sens 218.

Ainsi, seule l'onde rétrodiffusée revient dans la direction du laser de chauffe. L'onde rétrodiffusée est conduite via le coupleur dans le moyen de mesure 206. La fibre optique 100 comprend une extrémité libre 222, opposée à une extrémité connectée au coupleur 216. L'onde de chauffe 204 se propage dans la fibre optique 100 et sort de la fibre optique 100 au niveau de l'extrémité libre 222 de la fibre optique 100.

L'onde de chauffe 204 comprend une puissance d'au moins deux fois, de préférence d'au moins neuf fois, supérieure à la puissance l'onde d'interrogation 210. A titre d'exemple non limitatif, le coupleur 216 est agencé pour répartir la puissance de l'onde émise 214 par le laser de chauffe 202, par exemple en répartissant 90 % de la puissance de l'onde émise 214 du laser de chauffe 202 en l'onde de chauffe 204 et 10 % de la puissance de l'onde émise 214 du laser de chauffe 202 en l'onde d'interrogation 210. De cette manière, seule l'onde de chauffe 2004 peut provoquer une variation de température dans la fibre optique 100, notamment dans la partie amincie 102 de la fibre optique 100. L'onde d'interrogation 210 n'excite pas thermiquement la partie amincie 102 de la fibre 100. Ainsi, l'onde d'interrogation 210 peut sonder la température sans perturber la partie amincie 102 de la fibre optique 100.

A titre d'exemple non limitatif, le laser de chauffe 202 utilisé est un laser continu émettant une onde lumineuse de l'ordre de 100 mW dans la bande de longueur d'onde comprise entre 1500 nm et 1600 nm.

L'onde rétrodiffusée 208 peut contenir une composante de la rétrodiffusion de type Brillouin, de type Raman et de type Rayleigh.

L'unité de traitement 212 peut être agencée pour remonter à la mesure de pression en passant par une détermination d'une variation de température liée à l'onde rétrodiffusée 208.

La mesure de pression peut ensuite être déterminée par l'utilisation d'une table reliant la température à une pression.

Le capteur 209 du moyen de mesure 206 du dispositif 200 comprend de préférence un spectromètre. Le spectromètre reçoit l'onde rétrodiffusée 208 pour l'analyser. Le spectromètre est un réflectomètre optique, appelé aussi « Optical Time Domain Reflectometer » (OTDR) en anglais.

De préférence, le dispositif 200 est agencé pour mesurer une onde rétrodiffusée 208 de type Brillouin. L'unité de traitement 212 peut comprendre un thermomètre à effet Brillouin agencé pour mesurer une pression à partir d'une variation de température et d'une table reliant la variation de température à la mesure de pression.

Dans ce cas, l'unité de traitement 212 est agencée pour mesurer une vitesse de propagation de l'onde rétrodiffusée 208 sur la base d'un faible décalage en longueur de l'onde rétrodiffusée 208 par rapport à l'onde d'interrogation 210. Le faible décalage en longueur d'onde est causé par effet Doppler. La variation de température peut ensuite être déterminée en utilisant la relation mathématique Math 1. Une fréquence (ou une longueur d'onde) du flux optique de l'onde rétrodiffusée, notée $F_L$, peut dépendre linéairement de la température de la fibre optique 100 via une variation locale d'une vitesse acoustique.

Dans une autre variante, le dispositif 200 est agencé pour mesurer une onde rétrodiffusée 208 de type Raman. L'onde rétrodiffusée 208 de type Raman comprend une onde Anti-Stokes. Dans ce cas, l'unité de traitement 206 peut être agencée pour mesurer une variation d'intensité de l'onde Anti-Stokes rétrodiffusée 208 par rapport à l'onde d'interrogation 210 dont est issue l'onde rétrodiffusée. Dans ce cas, l'unité de traitement 212 peut comprendre un thermomètre à effet Raman. La variation de température peut être retrouvée par la formule Math 2.

Dans une autre variante, le dispositif 200 est agencé pour mesurer une onde rétrodiffusée 208 de type Rayleigh.

L'unité de traitement 212, via le réflectomètre, est agencée pour mesurer une variation des pertes optiques de l'onde rétrodiffusée 208 lors de sa propagation dans la partie amincie 102. Les pertes optiques sont mesurées en décibels (dB). Dans ce cas l'unité de traitement 212 peut comprendre un thermomètre à effet Rayleigh. L'unité de traitement 212 peut remonter à une variation de la température par la formule Math 3. A titre d'exemple non limitatif, lorsque l'onde rétrodiffusée 208 comprend une longueur d'onde centrale de 1550 nm, le décalage en température peut être égal à $\Delta T =$ (-0.801°C/GHz) $\Delta\nu$.

Dans une variante, l'unité de traitement 212 comprend de préférence les trois types de thermomètre (effet Brillouin, Effet Raman, et effet Rayleigh).

Le dispositif 200 est de préférence entièrement fibré, ce qui facilite les mesures de pression car il est plus facilement modulable et plus sécurisé. En outre, cela le rend plus facilement intégrable dans un système de mesure ou dans tout boitier de mesure agencé pour réaliser une mesure de pression.

Dans le dispositif 200, l'onde de chauffe 204 se propage dans la fibre optique 100. Une partie de l'onde de chauffe 204 est absorbée par le matériau de la fibre optique 100, ce qui provoque, dû au phénomène de convection, une augmentation de la température dans la fibre 100, notamment dans la partie amincie 102 de la fibre optique 100, et dans l'environnement extérieur à la fibre optique 100. Dans le cas du dispositif 200, l'onde de chauffe 204 non absorbée dans la partie amincie 102 est transmise, se propage dans la fibre optique 100 et continue sa propagation après la fibre optique 100. Seule l'onde d'interrogation 210 est rétrodiffusée dans la partie amincie 102 de la fibre optique 100. L'onde rétrodiffusée 208 est issue de la rétrodiffusion de l'onde d'interrogation 210 par les impuretés du verre (i.e. silice) dans la partie amincie 102. L'onde rétrodiffusée 208 porte l'information de la variation de température intégrée le long de la partie amincie 102 de la fibre optique 100.

Ainsi, dans le dispositif 200, l'onde de chauffe 204 est utilisée pour activer thermiquement la partie amincie 102 de la fibre optique 100. L'onde rétrodiffusée 208 est quant à elle traitée (i.e. analysée) pour mesurer la variation de température par spectroscopie. L'agencement de la fibre optique 100 favorise l'augmentation de température dans la partie amincie 102 de la fibre optique 100 et dans l'environnement extérieur à la fibre. Un tel agencement de fibre optique 100 est simple à mettre en œuvre et peu onéreux. En effet, la fibre optique 100 est de préférence nue, c'est-à-dire qu'elle ne comprend pas de « coating ». Ensuite, la mesure de pression suivant le dispositif 200 ne nécessite pas d'introduire au moins un réseau de Bragg dans la partie amincie 102 de la fibre optique 100 ou dans la fibre optique 100. En outre aucun traitement métallique ou partie métallique ou autre élément n'est nécessaire autour de la partie amincie 102 de la fibre optique 100 ou autour de la fibre optique 100. Seule l'interaction de l'onde de chauffe 204 dans la partie amincie 102 de la fibre 100 provoque des effets thermiques tels qu'une augmentation de température dans la partie amincie 102. Les dimensions, c'est-à-dire la section et/ou la taille (i.e. longueur), de la partie amincie sont choisies de manière à améliorer l'excitation thermique de la partie amincie 102 par l'onde de chauffe 204.

A titre d'exemple non limitatif, la variation de température peut être mesurée par le dispositif 200 avec une sensibilité de l'ordre du degré (°C), par exemple de 1°C.

L'unité de traitement est agencée pour mesurer une pression du vide inférieure ou égale à 0,9 bar, de préférence inférieure ou égale à $10^{-9}$ bar.

Le dispositif 200 est un capteur ponctuel en réalisant une mesure ponctuelle le long de la fibre optique 100.

La FIGURE 3 est une deuxième représentation schématique d'un exemple de réalisation d'un dispositif 300 selon l'invention comprenant une fibre optique 100 telle que décrite en FIGURE 1. Seules les différences avec le dispositif 200 illustré en FIGURE 2 seront décrites.

Le moyen de mesure 206 du dispositif 300 comprend en plus du capteur 209, un laser 302, dit laser de mesure 302, agencé pour émettre une onde optique 304, dite de mesure 304, dans la fibre optique 100. Dans le dispositif 300, l'onde de mesure 304 est confondue avec l'onde d'interrogation 210. L'onde de mesure 304 est utilisée pour interroger la fibre optique 100. Le laser de mesure 302 et le capteur 209 peuvent être deux éléments distincts ou séparés (i.e. par exemple, compris chacun dans un boitier distinct) ou compris dans un même élément (i.e. par exemple, compris dans un même boitier).

Le laser de chauffe 204 illustré en FIGURE 3 est similaire à celui illustré en FIGURE 2. Le laser de mesure 302 émet une onde de mesure 304 continue et mono-fréquence. Utiliser une onde de mesure continue pour l'onde de mesure 304 permet de sonder en permanence la fibre optique 100. L'onde de mesure 304 est décalée en longueur d'onde par rapport à l'onde de chauffe 204. Le décalage en longueur d'onde est inférieur ou égal à 10 nanomètres (nm), par exemple, il est de 5 nanomètres. La longueur d'onde d'émission du laser de mesure peut donc être de 1555 nm. Le décalage en longueur d'onde entre l'onde de chauffe 204 et l'onde de mesure 304 permet de mieux distinguer ces deux ondes lors des mesures et manipulations nécessaires avant les mesures, comme les réglages.

A titre d'exemple non limitatif, le laser de mesure 302 est un laser à cavité externe émettant une onde électromagnétique continue d'une puissance de 100 mW à la longueur d'onde de 1550 nm.

Dans une variante de dispositif 300, le laser de mesure 302 peut être agencé pour émettre au moins une onde de mesure 304 impulsionnelle. A titre d'exemple non limitatif, le laser de mesure 302 peut comprendre au moins un élément, par exemple un hacheur optique, pour émettre au moins une impulsion à partir d'une onde continue. L'onde de mesure 304 impulsionnelle est de préférence supérieure à la milliseconde (ms), par exemple elle peut être de 4 ms.

Le dispositif illustré en FIGURE 3 comprend un circulateur 306.

Le circulateur 306 autorise, dans le premier sens 218, le passage de l'onde de chauffe 204 du laser de chauffe 204 et le passage de l'onde de mesure 304 du laser de mesure 302 dans la fibre optique 100. Le circulateur 306 autorise, dans le deuxième sens 220, le passage de l'onde rétrodiffusée 208 issue de la partie amincie 102 vers le moyen de mesure 206.

L'onde rétrodiffusée 208 est donc issue de la rétrodiffusion de l'onde de mesure 304 par des défauts structurels dans la partie amincie 102. L'onde de chauffe 204 émise par le laser de chauffe 202 sert donc seulement à élever la température dans la partie amincie 102 de la fibre optique 100. Comme dans le dispositif 200, l'onde de chauffe se propage une seule fois dans la fibre optique 100.

Le capteur 209 du moyen de mesure 206 comprend un réflectomètre, par exemple un ODTR de la marque LUNA.

La précision de mesure du dispositif 300 est équivalente à la précision de mesure du dispositif 200.

Ainsi, dans le dispositif 300, l'onde de chauffe 204 du laser de chauffe 202 est utilisée pour chauffer la fibre optique 100, notamment la partie amincie 102 de la fibre optique 100. Le mesure de la température est obtenue par réflectométrie via le réflectomètre du capteur 209 du moyen de mesure 206.

Le dispositif 300 peut obtenir les mêmes performances de mesure du dispositif 200 illustré en FIGURE 2. Toutefois, utiliser un laser pour exciter thermiquement la fibre 100 et un autre laser pour interroger la fibre 100 permet de faciliter le traitement de la mesure de pression, notamment de dissocier plus facilement l'onde de chauffe 204 et l'onde d'interrogation 210. En outre, cela facilite leurs contrôles, tels que les réglages nécessaires à l'utilisation du dispositif 300.

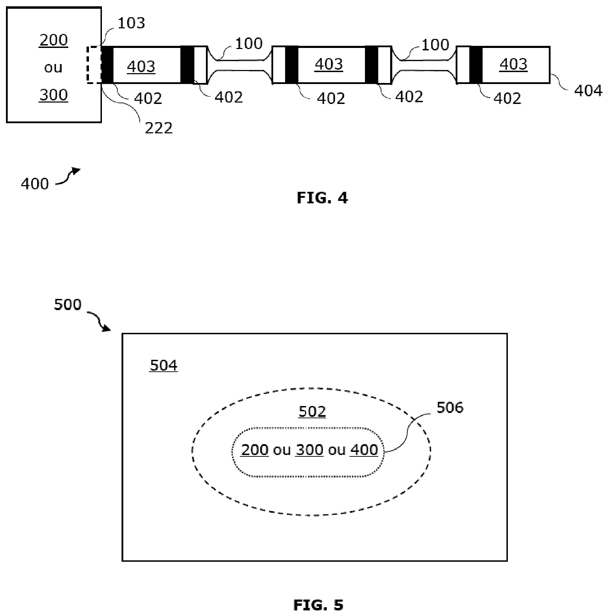

La FIGURE 4 est une représentation schématique d'un exemple de réalisation non limitatif d'un troisième dispositif 400 selon l'invention. Le dispositif 400 comprend :

- le dispositif 200 ou 300, et
- une pluralité de fibres optiques 100, comme illustrée en FIGURE 1, et connectées les unes aux autres en série à partir de la fibre optique 100 du dispositif 200 ou 300, notamment à partie d'une extrémité libre 222 (i.e. non connectée) de la partie non amincie 103 de la fibre optique 100 du dispositif 200 ou 300.

A titre d'exemple non limitatif, deux fibres optiques 100 sont connectées au dispositif 200 ou 300. Bien entendu, ce chiffre peut être supérieur ou inférieur en connectant seulement une seule fibre optique 100 au dispositif 200 ou 300. Les fibres optiques 100 du dispositif 400 sont connectées les unes aux autres par une soudure 402 de fibre optique ou par un moyen de raccordement mécanique 402, par exemple en utilisant un connecteur de fibre optique. Une fibre optique standard 403 est connectée à chaque partie non amincie 103 de la fibre optique 100 via la soudure 402 ou le moyen de raccordement mécanique 402. La fibre optique standard 403 est, par exemple du type SMF 28. De préférence, la fibre optique standard 403 est similaire à la partie non amincie 103 de la fibre optique 100.

Le capteur 209 du moyen de mesure 206 est agencé pour mesurer une pluralité d'ondes rétrodiffusées 208 issues de l'onde optique 210 se propageant dans chaque partie amincie 102 de l'ensemble des fibres optiques 100. L'unité de traitement 212 du dispositif 400 est ainsi agencée et/ou programmée pour mesure la pression du fluide entourant chaque partie amincie 102 à partir de la mesure des différentes ondes rétrodiffusées 208. La succession des fibres optiques 100 connectées les unes aux autres en série comprend une extrémité libre 404 sur laquelle aucun élément physique n'est connecté. L'onde de chauffe 204 et l'onde d'interrogation 210 ou l'onde de mesure 304 (si utilisation du dispositif 300) ressortent par l'extrémité libre 404.

Dans le dispositif 400, les fibres optiques 100 sont identiques. Bien entendu, dans une variante de dispositif 400, il peut avoir différentes fibres optiques 100, par exemple des fibres optiques 100 comprenant une section de partie amincie 102 et/ou une longueur de partie amincie 102 différentes.

La FIGURE 5 est une représentation schématique d'un système 500 de mesure selon l'invention comprenant un dispositif 200, 300, 400 selon l'invention tel que décrit en FIGURE 2 ou en FIGURE 3 ou en FIGURE 4.

Le système 500 de mesure de pression du vide comprend une jauge 502. La jauge 502 est placée dans une enceinte 504 dans laquelle circule un gaz. Le gaz comprend de l'air. La jauge 502 comprend une partie capteur 506 comprenant un dispositif 200 ou un dispositif 300 tel que décrit en FIGURE 2 ou en FIGURE 3.

La pression du vide est déduite de la quantité de chaleur cédée par la fibre au gaz contenu dans l'enceinte. L'onde rétrodiffusée 208 porte cette information.

Le système 500 de mesure de pression du vide peut atteindre les gammes de mesure pour le vide primaire et secondaire avec une résolution et répétabilité au moins équivalente, de préférence supérieure, aux systèmes de mesure basés sur une jauge de Pirani utilisant un filament chauffé et placé dans une enceinte dont on veut mesurer la pression.

Comme la partie capteur 506 du système 500 de mesure est fibré, notamment la partie mesure composé de la fibre optique 100 avec la partie amincie 102, le système 500 profite des avantages des propriétés intrinsèques des fibres optiques telles qu'une insensibilité aux ondes électromagnétiques, radios, nucléaires, etc. En outre, le système 500 peut être un système de mesure 500 distribué dans le sens où il peut réaliser des mesures sur de grandes zones de détection en assemblant en série plusieurs fibres optiques 100 avec une partie amincie 102 le long de cette zone de détection, par exemple en comprenant un dispositif 400 décrit en FIGURE 4. La zone de détection peut être, à titre d'exemple non limitatif, de l'ordre du kilomètre ou de la dizaine de kilomètres ou de la centaine de kilomètres, voire supérieure.

Bien entendu, l'invention n'est pas limitée aux exemples qui viennent d'être décrits. De nombreuses modifications peuvent être apportées à ces exemples sans sortir du cadre de la présente invention telle que décrite.

**Revendications**

1. Dispositif (200, 300) pour la mesure de pression comprenant:

   - une fibre optique (100) comprenant une partie amincie (102) ne comprenant pas de réseau de Bragg,
   - un laser (202), dit laser de chauffe (202), agencé pour émettre une onde optique, dit onde de chauffe (204), dans la partie amincie (102) afin de provoquer une augmentation de la température dans la partie amincie de la fibre,
   - un moyen de mesure (206) comprenant un capteur (209) agencé pour mesurer une onde optique rétrodiffusée (208) issue d'une onde optique (210), dite d'interrogation (210), et provenant de la partie amincie (102) de la fibre optique (100), et
   - une unité de traitement (212) agencée et/ou programmée pour mesurer une pression d'un fluide entourant la partie amincie (102) à partir de la mesure de l'onde rétrodiffusée (208).

2. Dispositif (200, 300) selon la revendication 1, dans lequel la fibre optique (100) ne comprend pas de réseau de Bragg et/ou dans lequel la partie amincie (102) de la fibre optique (100) ne comprend pas de traitement de surface métallique.

3. Dispositif (200, 300) selon la revendication 1 ou 2, dans lequel l'onde de chauffe (204) comprend une puissance d'au moins de deux fois, de préférence d'au moins neuf fois, supérieure à la puissance l'onde d'interrogation (210).

4. Dispositif (200) selon l'une quelconque des revendications précédentes, dans lequel le capteur (209) du moyen de mesure (206) comprend un spectromètre.

5. Dispositif (200, 300) selon l'une quelconque des revendications précédentes, dans lequel la partie amincie (102) comprend une section transverse inférieure à 50 micromètres, de préférence inférieure ou égale à 1 micromètre et/ou dans lequel la partie amincie (102) s'étend suivant une direction longitudinale inférieure à 150 millimètres, de préférence supérieure à 20 millimètres et/ou inférieure à 120 millimètres.

6. Dispositif (200, 300) selon l'une quelconque des revendications précédentes, dans lequel le laser de chauffe (202) comprend une longueur d'onde d'émission inférieure ou égale à 1650 nanomètres, de préférence égale à 1550 nanomètres $\pm$ 10 nanomètres et/ou dans lequel le laser de chauffe (202) est agencé pour émettre l'onde de chauffe de manière continue.

7. Dispositif (200) selon l'une quelconque des revendications précédentes, comprenant un coupleur (216) agencé pour diviser l'onde émise (214) par le laser de chauffe (202) en l'onde de chauffe (204) et l'onde d'interrogation (210), ledit coupleur (216) autorisant le passage de l'onde de chauffe (204) et de l'onde d'interrogation (210) vers la fibre optique (100) dans un premier sens (218) et autorisant le passage de l'onde rétrodiffusée (208) issue partie amincie (102) vers le moyen de mesure (206) dans un deuxième sens (220).

8. Dispositif (300) selon l'une quelconque des revendications 1 à 6, dans lequel le moyen de mesure (206) comprend un laser (302), dit laser de mesure (302), agencé pour émettre une onde optique (304), dite de mesure (304), dans la fibre optique (100), agissant comme l'onde d'interrogation (210), l'onde de mesure (304) comprenant de préférence un décalage en longueur d'onde par rapport à l'onde de chauffe (204) inférieur ou égal à 10 nanomètres.

9. Dispositif (300) selon la revendication 8, comprenant un circulateur (306) autorisant, dans un premier sens (218), le passage de l'onde de chauffe (204) du laser de chauffe (202) et le passage de l'onde de mesure (304) du laser de mesure (302) dans la fibre optique (100), et autorisant, dans un deuxième sens (220), le passage de l'onde rétrodiffusée (208) issue de la partie amincie (102) vers le moyen de mesure (206).

10. Dispositif (300) selon la revendication 8 ou 9, dans lequel le capteur (209) du moyen de mesure (206) comprend un réflectomètre.

11. Dispositif (200, 300) selon l'une quelconque des revendications précédentes, dans lequel l'onde rétrodiffusée (208) comprend une onde de Rayleigh, ou de Raman ou de Brillouin.

12. Dispositif (200, 300) selon l'une quelconque des revendications précédentes, dans lequel l'unité de traitement est agencée pour mesurer une pression du vide inférieure ou égale à 0,9 bar, de préférence inférieure ou égale à $10^{-9}$ bar.

13. Dispositif selon l'une quelconque des revendications précédentes, comprenant au moins une autre fibre optique (100) comprenant une partie amincie (102), l'au moins une autre fibre optique (100) étant connectée en série à une extrémité libre (222) de la fibre optique (100).

14. Système (500) de mesure de pression du vide comprenant une jauge (502) placée dans une enceinte (504) dans laquelle circule un fluide, ladite jauge (502) comprenant une partie capteur (506) comprenant un dispositif (200, 300) selon l'une quelconque des revendications précédentes.

15. Procédé de mesure de pression comprenant :

   - une émission, à l'aide d'un laser (202), dit laser de chauffe (202), d'une onde optique, dit onde de chauffe (204), dans une partie amincie (102) d'une fibre optique (100) afin de provoquer une augmentation de la température dans la partie amincie de la fibre, cette partie amincie (102) ne comprenant pas de réseau de Bragg,
   - une mesure, à l'aide d'un capteur (209) appartenant à un moyen de mesure (206), d'une onde optique rétrodiffusée (208) issue d'une onde optique (210), dite d'interrogation (210), et provenant de la partie amincie (102) de la fibre optique (100), et
   - une mesure, à l'aide d'une unité de traitement (212), d'une pression d'un fluide entourant la partie amincie (102) à partir de la mesure de l'onde rétrodiffusée (208).

**Patentansprüche**

1. Vorrichtung (200, 300) zur Druckmessung, umfassend:

   - eine optische Faser (100), umfassend einen abgedünnten Abschnitt (102), der kein Bragg-Gitter umfasst,
   - einen als Heizlaser (202) bezeichneten Laser (202), der dazu ausgelegt ist, eine als Heizwelle (204) bezeichnete optische Welle derart in den abgedünnten Abschnitt (102) zu emittieren, dass in dem abgedünnten Abschnitt der Faser ein Temperaturanstieg bewirkt wird,
   - eine Messeinrichtung (206), umfassend einen Sensor (209), der dazu ausgelegt ist, eine rückgestreute optische Welle (208), die von einer als Abfragewelle (210) bezeichneten optischen Welle (210) stammt und von dem abgedünnten Abschnitt (102) der optischen Faser (100) kommt, zu messen und
   - eine Verarbeitungseinheit (212), die dazu ausgelegt und/oder programmiert ist, den Druck eines den abgedünnten Abschnitt (102) umgebenden Fluids aus der Messung der rückgestreuten Welle (208) zu messen.

2. Vorrichtung (200, 300) nach Anspruch 1, wobei die optische Faser (100) kein Bragg-Gitter umfasst und/oder wobei der abgedünnte Abschnitt (102) der optischen Faser (100) keine metallische Oberflächenbehandlung umfasst.

3. Vorrichtung (200, 300) nach Anspruch 1 oder 2, wobei die Heizwelle (204) eine Leistung aufweist, die mindestens doppelt, vorzugsweise mindestens neunmal so groß ist wie die Leistung der Abfragewelle (210).

4. Vorrichtung (200) nach einem der vorhergehenden Ansprüche, wobei der Sensor (209) der Messeinrichtung (206) ein Spektrometer umfasst.

5. Vorrichtung (200, 300) nach einem der vorhergehenden Ansprüche, wobei der abgedünnte Abschnitt (102) einen Querschnitt von unter 50 Mikrometern, vorzugsweise von unter oder gleich 1 Mikrometer, aufweist und/oder wobei sich der abgedünnte Abschnitt (102) in einer Längsrichtung über eine Länge von weniger als 150 Millimetern, vorzugsweise von über 20 Millimetern und/oder weniger als 120 Millimetern, erstreckt.

6. Vorrichtung (200, 300) nach einem der vorhergehenden Ansprüche, wobei der Heizlaser (202) eine Emissionswellenlänge von unter oder gleich 1650 Nanometern, vorzugsweise von gleich 1550 Nanometern $\pm 10$ Nanometern, aufweist und/oder wobei der Heizlaser (202) dazu ausgelegt ist, die Heizwelle kontinuierlich zu emittieren.

7. Vorrichtung (200) nach einem der vorhergehenden Ansprüche, umfassend einen Koppler (216), der dazu ausgelegt ist, die vom Heizlaser (202) emittierte Welle (214) in die Heizwelle (204) und die Abfragewelle (210) zu splitten, wobei der Koppler (216) den Durchgang der Heizwelle (204) und der Abfragewelle (210) zur optischen Faser (100) in einer ersten Richtung (218) zulässt und in einer zweiten Richtung (220) den Durchgang der rückgestreuten Welle (208), die vom abgedünnten Abschnitt (102) stammt, zur Messeinrichtung (206) zulässt.

8. Vorrichtung (300) nach einem der Ansprüche 1 bis 6, wobei die Messeinrichtung (206) einen den als Messlaser (302) bezeichneten Laser (302) umfasst, der dazu ausgelegt ist, eine als Messwelle (304) bezeichnete optische Welle (304), die als Abfragewelle (210) fungiert, in die optische Faser (100) zu emittieren, wobei die Messwelle (304) vorzugsweise einen Wellenlängenversatz relativ zur Heizwelle (204) von unter oder gleich 10 Nanometern aufweist.

9. Vorrichtung (300) nach Anspruch 8, umfassend einen Zirkulator (306), der in einer ersten Richtung (218) den Durchgang der Heizwelle (204) vom Heizlaser (202) und den Durchgang der Messwelle (304) vom Messlaser (302) in der optischen Faser (100) zulässt und in einer zweiten Richtung (220) den Durchgang der rückgestreuten Welle (208), die vom abgedünnten Abschnitt (102) stammt, zur Messeinrichtung (206) zulässt.

10. Vorrichtung (300) nach Anspruch 8 oder 9, wobei der Sensor (209) der Messeinrichtung (206) ein Reflektometer umfasst.

11. Vorrichtung (200, 300) nach einem der vorhergehenden Ansprüche, wobei die rückgestreute Welle (208) eine Rayleigh-, Raman- oder Brillouin-Welle umfasst.

12. Vorrichtung (200, 300) nach einem der vorhergehenden Ansprüche, wobei die Verarbeitungseinheit zur Messung eines Unterdrucks von unter oder gleich 0,9 bar, vorzugsweise unter oder gleich $10^{-9}$ bar, ausgelegt ist.

13. Vorrichtung nach einem der vorhergehenden Ansprüche, umfassend mindestens eine weitere optische Faser (100), die einen abgedünnten Abschnitt (102) umfasst, wobei die mindestens eine weitere optische Faser (100) mit einem freien Ende (222) der optischen Faser (100) hintereinander verbunden ist.

14. Unterdruckmesssystem (500), umfassend ein Messinstrument (502), das in einer Kammer (504) platziert ist, in der ein Fluid umgewälzt wird, wobei das Messinstrument (502) eine Vorrichtung (200, 300) nach einem der vorhergehenden Ansprüche umfassenden Sensorabschnitt (506) umfasst.

15. Druckmessverfahren, umfassend:

- Emittieren einer als Heizwelle (204) bezeichneten optischen Welle mittels eines als Heizlasers (202) bezeichneten Lasers (202) in einen abgedünnten Abschnitt (102) einer optischen Faser (100), um derart eine Temperaturerhöhung in dem abgedünnten Abschnitt der Faser zu bewirken, wobei dieser abgedünnte Abschnitt (102) kein Bragg-Gitter umfasst,
- Messen einer rückgestreuten optischen Welle (208), die von einer als Abfragewelle (210) bezeichneten optischen Welle (210) stammt und von dem abgedünnten Abschnitt (102) der optischen Faser (100) kommt, mittels eines zu einer Messeinrichtung (206) gehörenden Sensors (209), und
- Messen eines Drucks eines Fluids, das den abgedünnten Abschnitt (102) umgibt, aus der Messung der rückgestreuten Welle (208) mittels einer Verarbeitungseinheit (212).

## Claims

1. A device (200, 300) for measuring pressure comprising:

   - an optical fibre (100) comprising a thinned part (102) not comprising a Bragg grating,
   - a laser (202), referred to as a heating laser (202), arranged to emit an optical wave, referred to as a heating wave (204), into the thinned part (102) in order to cause an increase in temperature in the thinned part of the fibre,
   - a measurement means (206) comprising a sensor (209) arranged to measure a backscattered optical wave (208) from an optical wave (210), referred to as an interrogation optical wave, (10), and coming from the thinned part (102) of the optical fibre (100), and
   - a processing unit (212) arranged and/or programmed to measure a pressure of a fluid surrounding the thinned part (102) from the measurement of the backscattered wave (208).

2. The device (200, 300) according to claim 1, wherein the optical fibre (100) does not comprise a Bragg grating and/or wherein the thinned part (102) of the optical fibre (100) does not comprise a metal surface treatment.

3. The device (200, 300) according to claim 1 or 2, wherein the heating wave (204) comprises a power of at least twice, preferably at least nine times, the power of the interrogation wave (210).

4. The device (200) according to any of the preceding claims, wherein the sensor (209) of the measurement means (206) comprises a spectrometer.

5. The device (200, 300) according to any of the preceding claims, wherein the thinned part (102) comprises a transverse cross-section of less than 50 micrometres, preferably less than or equal to 1 micrometre and/or wherein the thinned part (102) extends along a longitudinal direction of less than 150 millimetres, preferably greater than 20 millimetres and/or less than 120 millimetres.

6. The device (200, 300) according to any of the preceding claims, wherein the heating laser (202) comprises an emission wavelength less than or equal to 1650 nanometres, preferably equal to 1550 nanometres $\pm$ 10 nanometres and/or wherein the heating laser (202) is arranged to continuously emit the heating wave.

7. The device (200) according to any of the preceding claims, comprising a coupler (216) arranged to divide the wave emitted (214) by the heating laser (202) into the heating wave (204) and the interrogation wave (210), said coupler (216) allowing passage of the heating wave (204) and the interrogation wave (210) to the optical fibre (100) in a first direction (218) and allowing passage of the backscattered wave (208) from the thinned part (102) to the measurement means (206) in a second direction (220).

8. The device (300) according to any one of claims 1 to 6, wherein the measurement means (206) comprises a laser (302), referred to as the measurement laser (302), arranged to emit an optical wave (304), referred to as the measurement wave (304), into the optical fibre (100), acting as the interrogation wave (210), the measurement wave (304) preferably comprising a wavelength shift relative to the heating wave (204) less than or equal to 10 nanometres.

9. The device (300) according to claim 8, comprising a circulator (306) allowing, in a first direction (218), passage of the heating wave (204) from the heating laser (202) and passage of the measurement wave (304) from the measurement laser (302) into the optical fibre (100), and allowing, in a second direction (220), passage of the backscattered wave (208) from the thinned part (102) to the measurement means (206).

10. The device (300) according to claim 8 or 9, wherein the sensor (209) of the measurement means (206) comprises a reflectometer.

11. The device (200, 300) according to any of the preceding claims, wherein the backscattered wave (208) comprises a Rayleigh or Raman or Brillouin wave.

12. The device (200, 300) according to any of the preceding claims, wherein the processing unit is arranged to measure a vacuum pressure less than or equal to 0.9 bar, preferably less than or equal to $10^{-9}$ bar.

13. The device according to any of the preceding claims, comprising at least one further optical fibre (100) comprising a thinned part (102), the at least one further optical fibre (100) being connected in series to a free end (222) of the optical fibre (100).

14. A vacuum pressure measurement system (500), comprising a gauge (502) placed in an enclosure (504) in which a fluid circulates, said gauge (502) comprising a sensor part (506) comprising a device (200, 300) according to any of the preceding claims.

15. A pressure measurement method comprising:

   - emitting, using a laser (202), referred to as a heating laser (202), an optical wave, referred to as a heating wave (204), in a thinned part (102) of an optical fibre (100) in order to cause an increase in temperature in the thinned part of the fibre, this thinned part (102) does not comprising a Bragg grating,
   - measuring, using a sensor (209) belonging to a measurement means (206), a backscattered optical wave (208) originating from an interrogation optical wave (210) and coming from the thinned part (102) of the optical fibre (100), and
   - measuring, using a processing unit (212), a pressure of a fluid surrounding the thinned part (102) from the measurement of the backscattered wave (208).

**FIG. 1**

**FIG. 2**

**FIG. 3**

200
ou
300

103

403
402

100

403
402

100

403

402

222

402

402

404

400

**FIG. 4**

500

504

502

506

200 ou 300 ou 400

**FIG. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008085073 A

- US 5093569 A